# EUROPÄISCHE PATENTSCHRIFT

(11) **EP 1 842 976 B1**
(45) Veröffentlichungstag und Bekanntmachung des Hinweises auf die Patenterteilung: **05.08.2009**
(21) Anmeldenummer: 07103984.6
(22) Anmeldetag: 13.03.2007
(51) Int. Cl.: E04B 1/80, E04C 2/20, B32B 5/18, B32B 27/30, B32B 27/40

(54) **Beschichtete Schaumstoffplatte**
Coated foam boards
Plaque de mousse recouverte

(30) Priorität: 17.03.2006 EP 06111301
(43) Veröffentlichungstag der Anmeldung: 10.10.2007
(73) Patentinhaber: BASF SE, 67056 Ludwigshafen (DE)
(72) Erfinder: Alteheld, Armin, 55543, Bad Kreuznach (DE); Emge, Andreas, 49448, Lemförde (DE); Guerin Moreira, Andre, 67063, Ludwigshafen (DE); Schips, Carsten, 68542, Heddesheim (DE); Francis, Timothy, 68789, St. Leon-Rot (DE); Hahn, Klaus, 67281, Kirchheim (DE); Seifert, Holger, 49163, Bohmte (DE); Turznik, Gerhard, 67269, Grünstadt (DE)

(56) Entgegenhaltungen:
- US-A- 4 172 915
- US-A- 5 009 952

## Beschreibung

Die Erfindung betrifft eine Schaumstoffplatte, welche ein Zellgas mit einer geringeren Wärmeleitfähigkeit als Luft enthält und allseitig mit einem Polymerfilm, enthaltend Polyamid (PA), Polyvinylidenchlorid (PVdC), Polyvinylacetat (PVAc) oder Polyacrylnitril (PAN) ummantelt ist.

Die Wärmeleitfähigkeit von Schaumstoffen wird wesentlich durch die Wärmeleitfähigkeit des enthaltenen Zellgases bestimmt. Durch Permeationsprozesse entweichen die während der Schäumung inkorporierten Zellgase bei der anschließenden Lagerung aus dem Schaumstoff und werden gegen Luft ersetzt. Da Luft gegenüber den üblichen Zellgasen, z. B. Kohlenwasserstoffen wie Pentan oder Treibgasen, wie Kohlendoxid in der Regel eine höhere Wärmeleitfähigkeit aufweist, wird die Wärmeleitfähigkeit durch den Austausch des Zellgases signifikant erhöht. Des Weiteren kann ein schnelles auspermiieren des Zellgas und ein langsameres einpermiieren der Luft zu einem Zellunterdruck führen, der den Schaumstoff destabilisiert und zu einem Schrumpf führen kann.

Die WO 91/14724 beschreibt einen geschlossenzelligen Schaumstoff, der Gasbarrierepolymere, beispielsweise Ethylen-Vinylacetat-copolymere, Polyvinylalkohol, Polyacrylnitril, Polyvinyliden- fluorid oder chloride, Polyamid oder Acrylsäureester gleichmäßig dispergiert in der Polymermatrix enthält und dadurch die Permeationsrate von Luft in die Zellen und von halogenierten Treibmittel aus den Zellen des Schaumstoffes verringert.

Die Einarbeitung von Barrierepolymeren in die Polymermatrix kann jedoch den Schäumprozess und die daraus resultierende Schaumstruktur und Eigenschaften beeinflussen. So führt der Zusatz von Fremdpolymeren, die nicht in der Matrix löslich sind, häufig zu offenzelligen Schaumstoffen, da die Membranen während des Schäumens aufreißen können. Die teilweise offenzellige Struktur bewirkt hier eine schnelle Permeation des Zellgases aus dem Schaumstoff und führt zu weiteren negativen Eigenschaften, z.B. einer höheren Wasseraufnahme. Zudem können diese Zusätze möglicherweise als Keimbildner während des Schäumens wirken. Durch eine zu hohe Zahl von gebildeten Blasen wird das Erreichen von hohen Schaumdicken bei geringer Dichte erschwert.

Die WO 96/21564 beschreibt Wärmedämmplatten aus Polyurethanschaumstoff, der zwischen zwei Wänden in Gegenwart von Kohlendioxid als Treibmittel verschäumt wird und einen thermoplastischen Polyesterharzfilm als Kohlendioxidbarriereschicht zwischen dem Polyurethanschaumstoff und der zweiten Wandschicht aufweist. Der Nachteil dieses Verfahrens besteht darin, dass der Polyurethanschaumstoft nicht vollständig von der Barriereschicht umschlossen ist, wodurch die Barriereschicht nicht optimal ist.

Aufgabe der vorliegenden Erfindung war es, eine Schaumstoffplatte mit verringerter Wärmeleitfähigkeit, sowie ein Verfahren zur Herstellung zu finden, bei dem die mechanischen Eigenschaften des Schaumstoffes und das Brandverhalten nicht negativ beeinflusst werden.

Demgemäß wurde die oben beschriebene Schaumstoffplatte gefunden.

Bevorzugt weist der Schaumstoffkern eine Schäumhaut auf. Das Zellgas, welches erfindungsgemäß eine niedrigere Wärmeleitfähigkeit als Luft aufweist, enthält bevorzugt CO₂ und/oder einen bei Raumtemperatur gasförmigen Kohlenwasserstoff, wie Butan oder Pentan. Das Zellgas CO₂ ist in der Regel Bestandteil des Treibmittels, welches z. B über einen Extruder in die Polymerschmelze (XPS) eingetragen werden kann oder bei Reaktivharzschaumstoffen (PU) in situ während des Schäumprozesses aus den Komponenten gebildet wird.

Als Schaumstoffplatte können beispielsweise Partikelschaumstoffe oder Extrusionsschaumstoffe verwendet werden. Partikelschaumstoffe sind durch Versintern von Schaumpartikeln, beispielsweise aus expandiertem Polyolefinen, wie expandierbarem Polypropylen (EPP) oder vorgeschäumtem Partikeln aus expandierbarem Polystyrol (EPS) erhältlich. Bevorzugt verwendet man Schaumstoffplatten aus einem Extrusionsschaum auf Basis eines Styrolpolymeren (XPS).

Die Schaumstoffplatten haben eine Dichte im Bereich von 10 bis 100 g/l und sind geschlossenzellig, d.h. sie weisen bevorzugt Zellen auf, die zu mindestens 80%, insbesondere zu 95 bis 100% geschlossenzellig sind. Für eine Verbesserung der Haftung zu Mörtel-, Beton- und Putzsystemen können sie nach der Herstellung und vor der Beschichtung z.B. mit einem Waffelmuster geprägt und gestanzt werden.

Die Schaumstoffplatten weisen in der Regel eine Dicke im Bereich von 5 bis 500 mm, bevorzugt 10 bis 400 mm, besonders bevorzugt 15 bis 350 mm auf. Insbesondere für die Wärmedämmung in Bauanwendungen werden quaderförmige Schaumstoffplatten mit einem Querschnitt von mindestens 50 cm² eingesetzt, bevorzugt 100 bis 2000 cm².

Vorteilhaft können auch Schaumstoffplatten mit einer Wärmeleitfähigkeit von 0,035 W/mK (gemessen nach DIN 52612 bei 10°C) oder darunter eingesetzt werden. Diese können 0,01 bis 10 Gew.-%, bezogen auf das Polymer, eines partikelförmigen IR-Absorbers, wie Ruß, Metallpulver, z. B. Aluminiumpulver und Titandioxid, bevorzugt Graphit mit einer mittleren Partikelgröße von 1 bis 100 µm enthalten.

Besonders bevorzugt werden unter Verwendung halogenfreier Treibmittel hergestellte, gleichmäßige, geschlossenzellige und formstabile extrudierte Polystyrolschaumstoffkörper (XPS) aus einer Polystyrol-Thermoplastikmatrix mit einem mittleren Molekulargewicht M_{w} zwischen 110 000 und 500 000 g/mol und einer Uneinheitlichkeit M_{w}/Mₙ von größer als 1,5, wie sie in der EP-A-0 802 220 beschrieben sind. Sie weisen in der Regel eine Druckfestigkeit, gemessen nach DIN EN 826 im Bereich von 0,2 bis 1,0 N/mm², bevorzugt im Bereich von 0,3 bis 0,7 N/mm² auf. Bevorzugt liegt die Dichte, im Bereich von 25 bis 50 g/l.

Die erfindungsgemäße Schaumstoffplatte kann auch einen Polyurethan-Hartschaumstoff (PUR) als Kern enthalten. Hierbei kommen kontinuierlich oder diskontinuierlich hergestellte PU-Hartschaumplatten für Bauanwendungen bzw. Flüssiggasbehälter in Frage. Bevorzugt verwendet man Polyurethan-Schaumsstoffe aus Formulierungen, die überwiegend mit Kohlenwasserstoffen und nur zum kleinen Teil wassergetrieben sind. Die Dichte der Hartschaumstoffe beträgt vorzugsweise 10 bis 400 kg/m³, vorzugsweise 10-200, insbesondere 25 bis 150 kg/m³. Hartschaumstoffplatten erreichen die Wärmeleitfähigkeitsklasse 025 bei einer Dichte im Bereich 25 bis 150 g/l. Die Dicke der PU-Sandwichelemente liegt üblicherweise im Bereich 5 bis 150 mm (Kunststoffhandbuch, 3. Auflage, Seite 150), kann aber bis zu 250 mm erreichen.

Polyurethan-Schaumstoffe, insbesondere Polyurethan-Hartschaumstoffe, sind seit langem bekannt und vielfach in der Literatur beschrieben. Ihre Herstellung erfolgt üblicherweise durch Umsetzung von Polyisocyanaten a) mit Verbindungen mit mindestens zwei mit Isocyanatgruppen reaktiven Wasserstoffatomen b), zumeist Polyolen. Der Einsatz von Polyurethan-Hartschaumstoffen erfolgt insbesondere zur Wärmedämmung, beispielsweise von Kühlgeräten, Behältern oder Gebäuden.

Als organische Polyisocyanate a) kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Als Verbindungen mit mindestens zwei gegenüber Isocyanat reaktiven Wasserstoffatomen b), kommen insbesondere Polyetheralkohole b1) und/oder Polyesteralkohole b2) mit OH-Zahlen im Bereich von 100 bis 1200 mgKOH/g zum Einsatz.

Die gemeinsam mit den Polyetheralkoholen b1) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Polyetheralkohole b1) haben zumeist eine Funktionalität zwischen 2 und 8, insbesondere 3 bis 8. Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz. Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Zu den Verbindungen mit mindestens zwei gegenüber Isocyanat reaktiven Wasserstoffatomen b1) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Das Verfahren zur Herstellung der Polyurethanschaumstoffe wird weiterhin in Anwesenheit von Katalysatoren b3) sowie, falls erforderlich weiteren , Hilfs- und/oder Zusatzstoffen durchgeführt.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre oder tertiäre aliphatische Amine, Imidazole, Amidine, sowie Alkanolamine. Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Flammenschutzmittel b4) können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphoshonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphtalsäure mit aliphatischen Diolen und Alkoxylierungsprodukte des Dibombutendiols. Auch Verbindungen, die sich aus der Reihe der bromierten, OH-Gruppen enthaltenden Neopentylverbindungen ableiten, können zur Anwendung kommen.

Das Verfahren wird üblicherweise in Anwesenheit von Treibmitteln, Katalysatoren und Zellstabilisatoren sowie, falls erforderlich weiteren , Hilfs- und/oder Zusatzstoffen durchgeführt.

Als Treibmittel b5) kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Als Hilfsmittel und/oder Zusatzstoffe b6) kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Polyolkomponente b) in solchen Mengen zur Umsetzung gebracht, daß der Isocyanatindex in einem Bereich zwischen 80 und 220, vorzugsweise zwischen 100 und 200, liegt, für Polyisocyanurat-Hartschaumstoffe kann der Index bis zu 450 betragen.

Die Polyurethan-Hartschaumstoffe können diskontinuierlich oder kontinuierlich mit Hilfe bekannter Mischvorrichtungen hergestellt werden.

Üblicherweise werden die PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b1) bzw. b2), mit den den Katalysatoren b3), den Flammschutzmitteln b4), Treibmitteln b5) sowie den weiteren Hilfs- und/oder Zusatzstoffen b6) zu der Polyolkomponente b) vermischt und diese mit den Polyisocyanaten oder Mischungen aus den Polyisocyanaten a) und gegebenenfalls Treibmitteln, auch als Isocyanatkomponente bezeichnet, zur Umsetzung gebracht.

Die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die ursprünglichen Komponenten in bis zu 8 Einzelkomponenten aufgeteilt werden. Die Verschäumrezepturen lassen sich, abgeleitet von dem Zwei-Komponentenverfahren in einfacher Weise auf die Verarbeitung von Mehrkomponentensystemen umrechnen. Beim Doppelbandverfahren werden Polyol- und Isocyanatkomponente zumeist bei einer Temperatur von 15 bis 35 °C, vorzugsweise von 20 bis 30 °C mit einer Hochdruckmaschine dosiert und in einem Mischkopf vermischt. Dem Polyolgemisch können zuvor mit separaten Pumpen Katalysatoren und /oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

In einer alternativen Herstellungsvariante kann das Reaktionsgemisch mit Hoch- oder Niederdruckdosiermaschinen in geschlossene Stützwerkzeuge gegossen werden. Nach dieser Technologie werden z. B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren oder sehr voluminöse Schaumstoffblöcke herstellen.

Als Polymerfilm für die Ummantelung der Schaumstoffe eigenen sich Barrierematerialien, die auch aus der Nahrungsmittelverpackungs-Industrie bekannt sind, beispielsweise als Polymerschicht in PET-Flaschen für Kohlensäure-haltige Getränke. Bevorzugt enthalten die Polymerfilme Schichtsilikate, Polyamide (PA6, PA 6/6, PA 6/66/136, MXD-6), Polyvinylidenchlorid (PVdC), Poly(ethylen-co-vinylalkohol) (EVOH), Polyvinylacetat (PVAc), Polyacrylanitril (PAN).

Viele Barrierematerialien, die sehr geringe Permeationsraten gegenüber Zellgasen aufweisen, nehmen viel Wasser auf (z.B. EVOH) oder weisen eine hohe Permeationsrate gegenüber Wasserdampf auf. Die Aufnahme von Wasser oder die Permeabilität von Wasserdampf ist nachteilhaft. So kann die Barriereschicht bei Quellung durch Wasser die Barrierewirkung verlieren oder die Haftung zum beschichteten Material beeinträchtigt werden. Besonders vorteilhaft ist daher häufig das Aufbringen einer Barriereschicht, die sowohl eine geringe Permeabilität des Zellgases, als auch eine geringe Wasseraufnahme und geringe Wasserdampfdiffusionsraten aufweist. Besonders bevorzugt wird daher Polyvinylidenchlorid (PVdC) eingesetzt.

Für die Polymerfilme werden in der Regel Polymere verwendet, die unter 50°C filmbildend sind, insbesondere solche, welche bereits bei Raumtemperatur gute filmbildende Eigenschaften aufweisen.

In der Regel weist ein Polymerfilm mit einem Flächengewicht nach Trocknung im Bereich von 10 bis 250 g/m² ausreichend Barriereeigenschaften auf. Schichtdicken im Bereich von 1 µm bis 1000 µm, insbesondere 5 µm bis 100 µm sind in der Regel für die erfindungsgemäße Funktion der Beschichtung ausreichend.

Der Polymerfilm kann auch aus zwei oder mehreren, unterschiedlichen Schichten bestehen. So kann beispielsweise eine Schicht als Haftvermittler (Primer) dienen, während eine weitere, äußere Schicht die Wasseraufnahme senkt. Beide Schichten können dabei als Barrierematerial gegenüber dem Zellgas wirken. Bevorzugt wird eine Schaumstoffplatte mit einem Polymerfilm aus einer ersten, inneren Schicht aus Polyamid (PA), Polyacrylat, Polymetacrylat, Styrolcopolymer oder einen PU-Primer und einer zweiten äußeren Schicht aus Polyvinylidenchlorid (PVdC), wobei Polymerfilm mit der ersten Schicht auf der Schaumstoffplatte aufgebracht ist. Beispielsweise kann eine Haftvermittlung zum Dämmstoff durch PA 6/66/136 erfolgen, während die Aufnahme von Wasser und Wasserdampf durch PVdC gesenkt wird.

Vorteilhaft kann auch das Aufbringen einer orientierten Barriereschicht sein, bei der die Permeationsrate der Barriereschicht durch die Orientierung weiter gesenkt werden kann. Die Orientierung kann beispielsweise durch mechanisches Verstrecken einer Barrierefolie erzielt werden.

Zur Herstellung der erfindungsgemäßen Schaumstoffplatte kann man den Schaumstoffkern mit dem Polymerfilm durch ein- oder mehrmaliges Walzen, Tauchen oder Besprühen mit einer Polymerlösung oder Polymerdispersion ummanteln. Dies erfolgt in der Regel unmittelbar nach der Herstellung des Schaumstoffkerns, solange ein hoher Zellgasgehalt vorliegt und bevor das ursprünglich enthaltene Zellgas aus dem Schaum entwichen ist. Alternativ kann der Polymerfilm mit einer Walze auf die Schaumstoffplatte aufgetragen werden.

Gegebenenfalls kann auch ein Haftvermittler eingesetzt werden. Die Barriereschicht kann auch in Form einer Folie auf den zuvor hergestellten zellgashaltigen Schaumstoff geklebt oder auflaminiert oder der Schaumstoff in diese eingeschweißt werden.

Werden Reaktivschaumstoffe , beispielsweise Polyurethanschaumstoffe eingesetzt, so kann man die Schaumstoffplatten kontinuierlich mit dem Doppelbandverfahren herstellen. Die Barriereschicht wird dann auf die so erhaltenen Schaumstoffplatten erzeugt mittels einer Polymerlösung oder -dispersion, die durch Walzen, Sprühen, Eintauchen oder Walzen auf den Schaumstoff aufgetragen wird, wobei die Verwendung eines Haftvermittlers möglich ist. Alternativ kann die Barriereschicht als Folie auf eine metallische, papierartige oder kunststoffhaltige Deckschicht geklebt oder heißkaschiert werden. Diese Deckschicht wird dann im Doppelbandverfahren verwendet, um PU-Sandwichelemente enthaltend Barrierschichten herzustellen. Hierbei ist es denkbar, insgesamt eine oder mehrere Barriereschichten im Sandwichelement zu verwenden.

Ferner ist es möglich, Barriereschichten beim Ausschäumen von Hohlräumen einzusetzen. Hierbei wird die Innenseite einer zu füllenden Cavität zunächst vollständig durch Sprühen oder Eintauchen in einer Lösung/Dispersion des Barrierematerials und anschließende Trocknung beschichtet. Unter anderem wird hierbei ein Haftvermittler eingesetzt. Dann wird das PU-Reaktionsgemisch in die Cavität gefüllt und der Hohlraum durch den sich bildenden Schaumstoff ausgefüllt. Damit erhält man beim Schnitt durch die Wand des so hergestellten Kältegeräts folgenden Aufbaus von außen nach innen: Stahl - Barriereschicht - PU-Hartschaum - Barriereschicht - HIPS- bzw ABS-Inliner. Das Verfahren erlaubt es die 3D-Konturen des Schaumstoffs bzw. des Kältegerätekabinetts inklusive von Senken und Erhebungen vollständig zu beschichten.

Die Barriereschicht kann auch in Form einer Folie auf beschichtetes Coil bzw. auf HIPS oder ABS so angebracht werden (z. B. durch Heißkaschieren), das nach dem Zusammenbau dieser Bauteile zu einer Cavität die Barrierefolie alle Innenwände des Hohlraums abdeckt. Danach wird das PU-Reaktionsgemisch in die Cavität gefüllt und der Hohlraum ausgeschäumt. Falls erforderlich, kann zuerst eine Haftvermittlerschicht aufgebracht werden. In den genannten Beispielen zum Füllen einer Cavität können anstelle eines PU-Reaktionsgemisches auch zellgashaltige Partikelschaumkörper als Schüttung eingebracht werden (z.B. EPS, auch IR-absorberhaltiges EPS).

Bei Beschädigung der Barriereschicht kann diese vom Anwender durch nachträgliches Auftragen der Barrierekomponente, z.B. mittels eines Sprays, wieder versiegelt werden.

Bei der erfindungsgemäßen Schaumstoffplatte ist der Gasaustausch über den Polymerfilm als Barierreschicht verlangsamt. Sie weist daher eine verbesserten Wärmedämmung und geringeren Schrumpf auf.

Die erfindungsgemäße Schaumstoffplatte eignet sich unter anderem zur Verwendung in Kältegeräten, Bauanwendungen Brandschutzklasse B2 und B3 und zur Dämmung von Flüssiggasbehältern (z.B. für LNG bzw. LPG). Besonders bevorzugt ist die Verwendung als Wärmedämmstoff für das Bauwesen.

### Beispiele

### Verwendete Beschichtungen:

Barrierebeschichtung a: Ultramid 1C (Polyamid), erhalten durch Eintauchen der Schaumstoffplatten in eine 20%ige Lösung von PA 6/66/136 (Ultramid 1C, BASF AG) in einem Ethanol/Wasser-Gemisch (8:2)
Barrierebeschichtung b: Diofan, erhalten durch Eintauchen der Schaumstoffplatten in eine wässrige Dispersion von PVdC mit einem Feststoffanteil von 60 Gew.-% (Diofan 193 D, Solvin GmbH & Co. KG)

### Beispiel 1 - 4:

Eine unter Verwendung von CO₂ als Treibmittel extrudierte Polystyrolhartschaumstoffplatte (XPS) mit einer Dicke von 30 mm wurde direkt nach der Herstellung in mehrere Probekörper (20cm x 20cm) geschnitten und allseitig mit einer Polyamidschicht versehen. Die Beschichtung erfolgte durch Tauchen in eine 20%igen Lösung von Polyamid PA 6/66/136 (Ultramid 1C, BASF Aktiengesellschaft) in einem Ethanol/Wasser-Gemisch (8:2).

### Beispiel 5 und 6:

Ein entsprechend Beispiel 1 mit Polyamid beschichteter Probekörper wurde durch Tauchen in eine wässriger Dispersion von Polyvinylidenchlorid (PVdC) (Feststoffgehalt 60 Gew.-%, Diofan 193 D, Solvin GmbH& Co.KG) mit einer zweiten Schicht aus Polyvinylidenchlorid (PVdC) versehen.

Nach dem Trocknen der Beschichtung wurde die Wärmeleitfähigkeit (Lambda-Wert nach DIN 52612 bei 10°C) der Schaumstoffplatten nach 3, 10 und 18 Tagen bestimmt. Um die Permeation des Zellgases CO₂ zu beschleunigen, wurden die Probekörper bei 25°C bzw. 50°C gelagert.

Beschichtungsmenge bezogen auf Feststoff/Oberfläche, Lagertemperatur und Wärmeleitfähigkeit sind in Tabelle 1 zusammengestellt. Die Beispiele 1 - 4 zeigen, dass die Wärmeleitfähigkeit der Probekörper nach mehrtägiger Lagerung bei 25° bzw. 50°C deutlich über der von unbeschichteten Probenkörpern (Vergleichsversuche V1 und V2) liegt.
Die erfindungsgemäß beschichteten Polystyrolhartschaumplatten der Beispiele 1 bis 5 zeigten auch nach längerer Lagerzeit eine deutlich niedrigere Wärmeleitfähigkeit gegenüber den unbeschichteten Platten (V1 und V2). Die Beschichtung wies eine sehr gute Haftungen zur Polystyrolhartschaumplatte auf.

**Tabelle 1: Wärmeleitfähigkeit in Abhängigkeit von der Lagerzeit**

| Beispiel | Beschichtung [g/m²] | Lagertemperatur | λ [mW/mK] 3 Tage | λ [mW/mK] λ 10 Tage | [mW/mK] 68 Tage |
|---|---|---|---|---|---|
| 1 | (a), 71 | 50°C | 26,2 | 26,7 | 31,2 |
| 2 | (a), 189 | 50°C | 26,2 | 26,2 | 30,5 |
| 3 | (a), 68 | 25°C | 26,1 | 26,5 | 29,3 |
| 4 | (a), 120 | | | | |
| 5 | (a+b), 174 | 50°C | 25,7 | 25,7 | 27,1 |
| 6 | (a+b), 200 | | | | |
| V1 | | 50°C | 29,6 | 32,0 | 33,0 |
| V2 | | 25°C | 29,6 | 31,6 | 33,0 |

Nach dem Trocknen wurden die beschichteten Probekörper der Beispiele 4 und 6 und eine unbeschichtete Vergleichsprobe (V1) in einem Wasserbad gelagert. Die Probekörper wurden dabei durch Gewichte beschwert, um ein vollständiges Eintauchen in das Wasser zu erzielen. Die Wasseraufnahme der Proben wurde in Abhängigkeit von der Dauer der Lagerung in Wasser gravimetrisch bestimmt. Die Ergebnisse sind in Tabelle 2 zusammengestellt. Beispiel 6 zeigt, dass durch die zusätzliche Beschichtung die Wasseraufnahme und die Haftung verbessert werden konnte.

**Tabelle 2: Wasseraufnahme**

| | Wasseraufnahme [ Gew.-%] bei Lagerung | | |
|---|---|---|---|
| Beispiel | 24 h | 96 h | 24 Tage |
| 4 | 3,0 | 4,4 | -* |
| 6 | 1,6 | 2,3 | 3,4 |
| V1 | 1,5 | 2,0 | 4,1 |

| | | | |
|---|---|---|---|
| -* Beschichtung hatte sich abgelöst In der Tabelle 3 wurde der prozentuale Schrumpf der beschichteten Platten mit den beschichteten Platten verglichen, wobei eine deutliche Reduktion des Schrumpf zu erkennen ist. | | | |

**Tabelle 3: Schrumpf**

| | prozentuale Änderung des Schrumpfs | | |
|---|---|---|---|
| Beispiel | 7 Tagen | 21 Tagen | 70 Tagen |
| 4 | 0,1 % | 0,3% | 0,3% |
| 6 | 0,0 % | 0,2 % | 0,3% |
| V1 | 0,5% | 1 % | 1,2 % |

Beispiele 7 - 12 und Vergleichsversuche V3 - V5
(PU-Hartschaumsystem: Kältegeräte)

PU-Schaumstoffkörper wurden gemäß der Rezeptur in Tabelle 4 mittels eines Hochdruckpuromaten hergestellt. (Alle Angaben in Gewichtsteilen). Die Beschichtung erfolgte durch Eintauchen in die Lösung bzw. Dispersion des jeweiligen Beschichtungsmittels a bzw. b und anschließende Trocknung. Die Beschichtungen weisen ein Flächengewicht von je 150 g/m² auf.

Polyolkomponente A: 30 % Polyol A, 47.6% Polyol B, 16% Polyol C, 2% Stabilisator 1, 2.3% Wasser, 2.1 % Katalysator 1

**Tabelle 4**

| | Beispiel | | | | | | | | |
|---|---|---|---|---|---|---|---|---|---|
| | V3 | 7 | 8 | V4 | 9 | 10 | V5 | 11 | 12 |
| Herstellparameter: | | | | | | | | | |
| Polyolkomponente A | 100 TI. | | | 100 TI. | | | 100 TI. | | |
| Treibmittel | 14 TI. CP70 | | | 35 TI. 245 fa | | | 35 TI. 141 b | | |
| Isocyanat Lupranat M20S: | 125 TI. | | | 106 TI. | | | 106 TI | | |
| Barrierebeschichtung | - | a | b | - | a | b | - | a | b |
| Index | 117 | 117 | 117 | 117 | 117 | 117 | 117 | 117 | 117 |
| | | | | | | | | | |

| Schaumstoffeigenschaften: | | | | | | | | | |
|---|---|---|---|---|---|---|---|---|---|
| Freigeschäumte Rohdichte [g/l] | 24.4 | 24.4 | 24.4 | 23.0 | 23.0 | 23.0 | 22.0 | 22.0 | 22.0 |
| Druckfestigkeit [N/mm²] bei RD 31 g/l | 0.15 | 0.15 | 0.15 | 0.13 | 0.13 | 0.13 | 0.13 | 0.13 | 0.13 |
| Fliessfaktor (min. Fülldichte/freie Rohdichte) | 1.31 | 1.31 | 1.31 | 1.30 | 1.30 | 1.3 | 1.42 | 1.42 | 1.42 |
| Nachtrieb nach 24h, 5 min. 10% OP | 92.0 | 92.0 | 92.0 | 92.2 | 92.2 | 92.2 | 92.4 | 92.4 | 92.4 |
| Wärmeleitfähigkeit [mW/mK] nach 24 h | 19.7 | 21.0 | 20.6 | 17.9 | 18.6 | 19.0 | 16.8 | 17.3 | 17.5 |
| Wärmeleitfähigkeit [mW/mK] nach 1200 h Lagerung bei 55°C | 25.0 | 23.3 | 21.9 | 22.7 | 20.9 | 20.1 | 21.7 | 19.7 | 18.9 |

Beispiele 13 - 16, Vergleichsversuche V6 und V7
(PU-Hartschaumsystem: Construction)

PU-Schaumstoffkörper wurden gemäß der Rezeptur in Tabelle 5 mit dem Doppelbandverfahren hergestellt (Alle Angaben in Gewichtsteilen). Die Beschichtung erfolgte durch Eintauchen die Lösung bzw. Dispersion des jeweiligen Beschichtungsmittels a bzw. b und anschließende Trocknung. Die Beschichtungen weisen ein Flächengewicht von je 150 g/m² auf.

### Polyolkomponente B

31 % Polyol D, 39% Polyol E, 23,5 % Polyol F, 3% Stabilisator 2, 3 % Katalysator 2, 0,5% Wasser.

Polyolkomponente C 47,5 % Polyol G, 5% Polyol H, 5% Polyol 35% Flammschutzmittel 1, 2% Stabilisator 3, 2.5% Wasser, 3.0% Katalysator 3.

**Tabelle 5**

| | Beispiel | | | | | |
|---|---|---|---|---|---|---|
| | V 6 | 13 | 14 | V7 | 15 | 16 |
| Herstellparameter: | | | | | | |
| Polyolkomponente B | 100 TI. | | | | | |
| Polyolkomponente C | | | | 100 TI. | | |
| Treibmittel | 17 TI. CP95 | | | 6 TI. n-Pentan | | |
| Isocyanat Lupranat M50 | 299 TI. | | | 163 TI. | | |
| Barrierebeschichtung | - | a | b | - | a | b |
| Index | 345 | 345 | 345 | 125 | 125 | 125 |
| | | | | | | |
| Schaumstoffeigenschaften: | | | | | | |
| Rohdichte [g/l] | 68.7 | 68.7 | 68.7 | 40.4 | 40.4 | 40.4 |
| Aushärtung | + | + | + | + | + | + |
| Brandverhalten | B3 | B3 | B3 | B2 | B2 | B2 |
| Wärmeleitfähigkeit [mW/mK] nach 24 h | 21.3 | 22.0 | 22.2 | 22.3 | 22.9 | 23.0 |
| Wärmeleitfähigkeit [mW/mK] nach 1200 h Lagerung bei 55°C | 26.6 | 24.6 | 23.6 | 27.1 | 25.5 | 24.4 |

Beispiele 17 - 20, Vergleichsversuch V8 und V9
(PU-Hartschaumsystem: Dämmung von Flüssiggasbehältern)

PU-Schaumstoffkörper wurden gemäß der Rezeptur in Tabelle 6 hergestellt (Alle Angaben in Gewichtsteilen). Der Schaumstoff wird in einem kontinuierlichen Verfahren hergestellt, indem das Reaktionsgemisch auf ein Glasfaserflies bestehend aus E-Glass (Saint-Gobain Vetrotex) aufgetragen wird und dann frei aufschäumt. Die Beschichtung erfolgte durch Auftrag der flüssigen Formulierungen des Barrierematerials auf den PU-Schaumstoff mittels einer Walze und anschließende Trocknung. Die Beschichtungen weisen ein Flächengewicht von je 150 g/m² auf.

### Polyolkomponente D

19% Polyol J, 35,5% Polyol K, 34% Polyol B, 5 % Polyol C, 3% Polyol I, 1,5% Stabilisator 4, 1 % Katalysator 4, 1 % Wasser.

### Polyolkomponente E

75% Polyol L, 16,5 % Polyol A, 5% Polyol F, 1,5% Stabilisator 4, 1 % Katalysator 4, 1 % Wasser.

**Tabelle 6**

| | Beispiel | | | | | |
|---|---|---|---|---|---|---|
| | V 8 | 17 | 18 | V 9 | 19 | 20 |
| Herstellparameter: | | | | | | |
| Polyolkomponente D | 100 TI. | 100 TI. | 100 TI. | | | |
| Polyolkomponente E | | | | 100 TI. | 100 TI. | 100 TI. |
| Isocyanat Lupranat M20S | 130 TI. | 130 TI. | 130 TI. | 128TI. | 128 TI. | 128 TI. |
| Barrierebeschichtung | - | a | b | - | a | b |
| Index | 95 | 95 | 95 | 110 | 110 | 110 |
| | | | | | | |
| Schaumstoffeigenschaften: | | | | | | |
| Rohdichte [g/l] | 122 | 122 | 122 | 126 | 126 | 126 |
| Druckfestigkeit [N/mm²] | 135 | 135 | 135 | 137 | 137 | 137 |
| Geschlossenzelligkeit [%] | 97 | 97 | 97 | 95 | 95 | 95 |
| Wärmeleitfähigkeit [mW/mK] nach 24 h | 24.3 | 24.6 | 24.8 | 24.8 | 25.0 | 25.1 |
| Wärmeleitfähigkeit [mW/mK] nach 1200 h Lagerung bei 55°C | 33.8 | 26,8 | 25,9 | 34.2 | 27.0 | 25.9 |

Die Beispiele in Tabelle 4 bis 6 zeigen unter beschleunigter Alterung (55°C) nach 50 Tagen eine Erhöhung de Wärmeleitfähigkeit und damit schlechtere Dämmeigenschaften von etwa 5 mW/mK ohne Barrierebeschichtung, von ca. 2.5 mW/mK mit Polyamidbarriere (a) und von 1.5 mW/mK mit Diofan-Barriere (b) gegenüber dem jeweiligen Ausgangswertes nach einem Tag. Die Barriere ist also effizienter. Alle anderen Schaumstoffdaten zeigen, dass die sonstigen Eigenschaften durch das Anbringen der Barriere unverändert sind.

**Tabelle 7: Wasseraufnahme**

| | Wasseraufnahme [Gew.-%] bei Lagerung | |
|---|---|---|
| Beispiel | 24 h | 48 h |
| 7 | 7,2 | 8,8 |
| V3 | 22,6 | 36,3 |

Nach dem Trocknen wurden die beschichteten Probekörper des Beispiels 7 und eine unbeschichtete Vergleichsprobe (V3) in einem Wasserbad gelagert. Die Probekörper wurden dabei durch Gewichte beschwert, um ein vollständiges Eintauchen in das Wasser zu erzielen. Die Wasseraufnahme der Proben wurde in Abhängigkeit von der Dauer der Lagerung in Wasser gravimetrisch bestimmt. Die Ergebnisse sind in Tabelle 6 zusammengestellt. Die Wasseraufnahme des Schaumstoffs wird durch die Barriereschicht deutlich reduziert.

Verwendete Rohstoffe zur Herstellung der Polyurethane (Bsp. 7-20 sowie V3-V9):
Polyol A: Polyetherpolyol aus vic. Toluylendiamin, Ethylenoxid und Propylenoxid. Hydroxylzahl 400.
Polyol B: Polyetherpolyol auf Basis Saccharose, Glyerin und Propylenoxid. Hydroxylzahl 450.
Polyol C: Polyetherpolyol aus Trimethylolpropan, Propylenoxid. Hydroxylzahl 160. Polyol D: Polyesterol aus Adipinsäure, Phthalsäureanhydrd, Ölsäure und Trimethylolpropan, Hydroxylzahl 385.
Polyol E: Polyetherpolyol aus Glycerin, Propylenoxid. Hydroxylzahl 35.
Polyol F: Gemisch aus 86% Dipropylenglykol und 14% Ethylengykol
Polyol G: Polyetherpolyol aus Saccharose, Diethylenglykol und Propylenoxid, Hydroxylzahl 490.
Polyol H: Polyetherpolyol aus Ethylendiamin und Propylenoxid, Hydroxylzahl 770. Polyol I: Gemisch aus 90% Glycerin und 10% Dipropylenglykol
Polyol J: Polyetherol aus Saccharose, Glycerin Propylenoxid, Hydroxylzahl 510.
Polyol K: Polyesterol aus Phthalsäureanhydrid und Diethylenglykol, Hydroxylzahl 300. Polyol L: Polyetherol aus Saccharose, Pentaerythtrit, Diethylenglykol und Propylenoxid, Hydroxylzahl 400.

Stabilisator 1: TegostabÒ B8462, Degussa AG
Stabilisator 2: Gemisch aus 50% TegostabÒ B8461 und 50% TegostabÒ B8409, Degussa AG
Stabilisator 3: Gemisch aus 75% TegostabÒ B8466 (Degussa AG), 25% DabcoÒ DC5103 (Air Products)
Stabilisator 4: TegostabÒ B8443 (Degussa AG)
Katalysator 1: Gemisch aus 50% N-N-Dimethylcyclohexylamin, 30% LupragenÒ N301, BASF AG und 20% LupragenÒ N600, BASF AG.
Katalysator 2: 10% LupragenÒ N301, 90% einer 47%igen Lösung von Kaliumacetat in Ethylenglykol, BASF AG.
Katalysator 3: KX315, Elastogran GmbH
Katalysator 4: KX322, Elastogran GmbH
Flammschutzmittel 1: Gemisch aus 54% Trischlorpropylphosphat, 33% IxolÒ B251 (Solvay AG)und 13% Diethylethanphosphat Treibmittel:
CP70: Treibmittelgemisch aus 70% Cyclopentan und 30 Isopentan
CP95: Treibmittelgemisch aus 95% Cyclopentan und 5 Isopentan 245fa: 1,1,3,3,3-Pentafluorpropan 141b: 1,1-Dichlor-1-fluorethan

## Patentansprüche

1. Schaumstoffplatte mit einer Dichte im Bereich von 10 bis 100 g/l, enthaltend ein Zellgas mit einer geringeren Wärmeleitfähigkeit als Luft, **dadurch gekennzeichnet, dass** sie allseitig mit einem Polymerfilm mit einem Flächengewicht im Bereich von 10 bis 250 g/m², enthaltend Polyamid (PA), Polyvinylidenchlorid (PVdC), Polyvinylacetat (PVAc) oder Polyacrylnitril (PAN) ummantelt ist.

2. Schaumstoffplatte nach Anspruch 1, **dadurch gekennzeichnet, dass** sie als Zellgas CO₂ oder Pentan enthält.

3. Schaumstoffplatte nach Anspruch 1 oder 2, **dadurch gekennzeichnet, dass** der Schaumstoffkern einen Anteil an geschlossenen Zellen von mindestens 80% aufweist.

4. Schaumstoffplatte nach Anspruch 1 bis 3, **dadurch gekennzeichnet, dass** sie einen Extrusionsschaumstoff auf Basis eines Styrolpolymeren (XPS) als Kern enthält.

5. Schaumstoffplatte nach Anspruch 1 bis 3, **dadurch gekennzeichnet, dass** sie einen Polyurethan-Hartschaumstoff (PUR) als Kern enthält.

6. Schaumstoffplatte nach einem der Ansprüche 1 bis 5, **dadurch gekennzeichnet, dass** der Polymerfilm aus zwei oder mehreren, unterschiedlichen Schichten besteht.

7. Schaumstoffplatte nach einem der Ansprüche 1 bis 6, **dadurch gekennzeichnet, dass** der Polymerfilm aus einer ersten, inneren Schicht aus Polyamid (PA) oder einem PU-Primer und einer zweiten äußeren Schicht aus Polyvinylidenchlorid (PVdC), besteht, wobei der Polymerfilm mit der ersten Schicht auf der Schaumstoffplatte aufgebracht ist.

8. Verfahren zur Herstellung einer Schaumstoffplatte gemäß einem der Ansprüche 1 bis 7, **dadurch gekennzeichnet, dass** man den Schaumstoffkern mit dem Polymerfilm durch ein- oder mehrmaliges Walzen, Tauchen oder Besprühen mit einer Polymerlösung oder Polymerdispersion ummantelt.

9. Verwendung der Schaumstoffplatte nach einem der Ansprüche 1 bis 7 als Wärmedämmstoff für das Bauwesen.

10. Verwendung der Schaumstoffplatte nach einem der Ansprüche 1 bis 7 für Kältegeräte.

## Claims

1. A foam board having a density in the range from 10 to 100 g/l and comprising a cell gas having a thermal conductivity lower than that of air, which is enveloped on all sides by a polymer film having a weight per unit area in the range from 10 to 250 g/m² and comprising polyamide (PA), polyvinylidene chloride (PVdC), polyvinyl acetate (PVAc) or polyacrylonitrile (PAN).

2. The foam board according to claim 1 which comprises CO₂ or pentane as cell gas.

3. The foam board according to claim 1 or 2, wherein the foam core has a proportion of closed cells of at least 80%.

4. The foam board according to any of claims 1 to 3 which comprises an extruded foam based on a styrene polymer (XPS) as core.

5. The foam board according to any of claims 1 to 3 which comprises a rigid polyurethane foam (PUR) as core.

6. The foam board according to any of claims 1 to 5, wherein the polymer film consists of two or more different layers.

7. The foam board according to any of claims 1 to 6, wherein the polymer film comprises a first inner layer of polyamide (PA) or a PU primer and a second outer layer of polyvinylidene chloride (PVdC), with the polymer film being applied with the first layer facing the foam board.

8. A process for producing a foam board according to any of claims 1 to 7, which comprises enveloping the foam core by the polymer film by means of single or multiple rolling, dipping or spraying using a polymer solution or polymer dispersion.

9. The use of the foam board according to any of claims 1 to 7 as thermal insulation material for building and construction.

10. The use of the foam board according to any of claims 1 to 7 for refrigeration appliances.

## Revendications

1. Plaque de mousse ayant une densité dans la plage de 10 à 100 g/l, contenant un gaz cellulaire ayant une plus faible conductibilité thermique que l'air, **caractérisée en ce qu'**elle est enveloppée de tous les côtés avec un film en polymère ayant un poids par unité de surface dans la plage de 10 à 250 g/m², contenant du polyamide (PA), du poly(chlorure de vinylidène) (PVdC), du poly(acétate de vinyle) ou du polyacrylonitrile (PAN).

2. Plaque de mousse selon la revendication 1, **caractérisée en ce qu'**elle contient en tant que gaz cellulaire CO₂ ou du pentane.

3. Plaque de mousse selon la revendication 1 ou 2, **caractérisée en ce que** le noyau de la mousse présente une teneur d'au moins 80 % en cellules fermées

4. Plaque de mousse selon l'une quelconque des revendications 1 à 3, **caractérisée en ce qu'**elle contient une mousse extrudée à base d'un polymère de styrène (XPS) en tant que noyau.

5. Plaque de mousse selon l'une quelconque des revendications 1 à 3, **caractérisée en ce qu'**elle contient une mousse rigide de polyuréthanne (PUR) en tant que noyau.

6. Plaque de mousse selon l'une quelconque des revendications 1 à 5, **caractérisée en ce que** le film en polymère est constitué de deux ou plus de deux couches différentes.

7. Plaque de mousse selon l'une quelconque des revendications 1 à 6, **caractérisée en ce que** le film en polymère est constitué d'une première couche interne à base de polyamide (PA) ou d'un primaire en PU et d'une deuxième couche externe à base de poly(chlorure de vinylidène) (PVdC), le film en polymère étant appliqué avec la première couche sur la plaque de mousse.

8. Procédé pour la production d'une plaque de mousse selon l'une quelconque des revendications 1 à 7, **caractérisé en ce qu'**on enveloppe le noyau en mousse avec le film en polymère par laminage, immersion ou pulvérisation une ou plusieurs fois avec une solution de polymère ou une dispersion de polymère.

9. Utilisation de la plaque de mousse selon l'une quelconque des revendications 1 à 7, en tant qu'isolant thermique pour le bâtiment.

10. Utilisation de la plaque de mousse selon l'une quelconque des revendications 1 à 7, pour des appareils frigorifiques.
